Europäisches Patentamt

European Patent Office

Office européen des brevets

(19)

(11) **EP 1 124 406 B1**

(12) **EUROPÄISCHE PATENTSCHRIFT**

(45) Veröffentlichungstag und Bekanntmachung des Hinweises auf die Patenterteilung:
**01.02.2006 Patentblatt 2006/05**

(51) Int Cl.:
***H05B 41/24*** *(2006.01)*

(21) Anmeldenummer: **00125973.8**

(22) Anmeldetag: **28.11.2000**

(54) **Betriebsverfahren für eine Entladungslampe mit mindestens einer dielektrisch behinderten Elektrode**

Method of operating a dielectric barrier discharge lamp

Procédé d' alimentation d' une lampe à décharge à barrière diélectrique

(84) Benannte Vertragsstaaten:
**AT BE CH CY DE DK ES FI FR GB GR IE IT LI LU MC NL PT SE TR**

(30) Priorität: **09.02.2000 DE 10005975**

(43) Veröffentlichungstag der Anmeldung:
**16.08.2001 Patentblatt 2001/33**

(73) Patentinhaber: **Patent-Treuhand-Gesellschaft für elektrische**
**Glühlampen mbH**
**81543 München (DE)**

(72) Erfinder:
- **Jerebic, Simon**
 **93049 Regensburg (DE)**
- **Thiel, Gerwin**
 **82223 Eichenau (DE)**

(56) Entgegenhaltungen:
**DE-A- 19 816 377**

## Beschreibung

Die Erfindung betrifft ein Betriebsverfahren für eine Entladungslampe mit wenigstens einer dielektrisch behinderten Elektrode gemäß dem Oberbegriff des Patentanspruch 1 bzw. 2. Insbesondere handelt es sich um ein Verfahren zur Zündung einer dielektrisch behinderten Entladung in einer Entladungslampe.

### I. Stand der Technik

In der WO 99/05892 ist ein Betriebsverfahren für eine Entladungslampe mit dielektrisch behinderten Elektroden und eine entsprechende Schaltungsanordnung zur Durchführung dieses Verfahrens beschrieben. Während des Betriebs wird zumindest eine der dielektrisch behinderten Elektroden mit periodisch wiederkehrenden Spannungsimpulsen beaufschlagt, die eine dielektrisch behinderte Entladung in der Entladungslampe verursachen. Der Spitzenwert oder Amplitude dieser Spannungsimpulse liegt, abhängig von der Geometrie des Entladungsgefäßes und der Anordnung der Lampenelektroden, zwischen ca. 1 kV bis ungefähr 5 kV. Die Impulsfolgefrequenz liegt im Bereich von ungefähr 25 kHz bis ca. 80 kHz. Die Spannungsimpulse werden mit Hilfe eines Sperrwandlers und eines Transformators, dessen Sekundärwicklungen mit den Lampenelektroden verbunden sind, erzeugt. Während der Leitphase des Sperrwandlerschalttransistors baut sich im Transformator ein Magnetfeld auf, dessen elektrische Energie während der Sperrphase des Sperrwandlerschalttransistors in Form von Spannungsimpulsen an die Entladungslampe abgegeben wird. Die Entladungslampe wird während der gesamten Betriebsdauer, also auch während der Zündphase, mit ihrer Nennbetriebsspannung betrieben. Es hat sich gezeigt, daß sich beim Zünden einer dielektrisch behinderten Entladung in der Entladungslampe bevorzugte Entladungskanäle ausbilden können, die die Entstehung einer gleichmäßig über die Länge der Elektroden verteilten dielektrisch behinderten Entladung verhindern und eine entlang des Entladungsgefäßes inhomogene Lichtemission der Entladungslampe verursachen. Außerdem ist es bei Entladungslampen mit dielektrisch behinderten Elektroden nicht möglich, die Zündwilligkeit der Entladungslampe durch Vorheizen der Elektroden oder mit Hilfe eines Elektronenemitters zu verbessern, um mittels Glühemission bzw. mittels Feldemission ausreichend freie Ladungsträger für die Zündung der Entladung zur Verfügung zu stellen.

Die DE 198 16 377 A1 offenbart ein Verfahren zur Anregung von Entladungen zwischen wenigstens zwei Elektroden, von denen mindestens eine mit einer isolierenden Schicht versehen ist, wobei zwischen den Elektroden Hochspannungsimpulse angelegt werden und die Hochspannungsimpulse Teile von Impulspaketen sind, die jeweils einen Vorimpuls aufweisen, der dem Hochspannungsimpuls vorangestellt ist.

### II. Darstellung der Erfindung

Es ist die Aufgabe der Erfindung, ein Betriebsverfahren für eine Entladungslampe mit mindestens einer dielektrisch behinderten Elektrode anzugeben, daß eine sichere Zündung der dielektrisch behinderten Entladung in der Lampe gewährleistet. Insbesondere soll verhindert werden, daß sich in der Entladungslampe einzelne, bevorzugte Entladungskanäle ausbilden, die eine inhomogene Lichtemission der Lampe hervorrufen würden.

Diese Aufgabe wird erfindungsgemäß durch die Merkmale des Patentanspruchs 1 oder 2 gelöst.

Eine besonders bevorzugte erste Ausführungsform der Erfindung ist im Anspruch 1 offenbart. Diese Variante des erfindungsgemäßen Betriebsverfahren ist nur auf solche Entladungslampen mit mindestens einer dielektrisch behinderten Elektrode anwendbar, die eine Zündhilfe aufweisen. Das sind insbesondere Apertulampen, deren Entladungsgefäß teilweise mit einer metallischen Beschichtung versehen ist oder deren Entladungsgefäß teilweise von einer elektrisch leitfähigen Blende umgeben ist, oder Entladungslampen, deren Entladungsgefäß eine lichtdurchlässige, elektrisch leitfähige Beschichtung, beispielsweise eine Indium-Zinnoxid-Schicht (ITO-Schicht), trägt. Die vorgenannten elektrisch leitfähigen Beschichtungen oder Blenden befinden sich üblicherweise auf Massepotential und verbessern nicht nur die elektromagnetische Verträglichkeit der Lampen, sondern wirken auch als kapazitive Zündhilfe.

Gemäß der ersten Ausführungsform des erfindungsgemäßen Betriebsverfahrens wird zum Zünden einer dielektrisch behinderten Entladung in der Entladungslampe die mindestens eine dielektrisch behinderte Elektrode mit periodisch wiederkehrenden Spannungsimpulsen beaufschlagt, wobei die Spannungswerte der Spannungsimpulse unterhalb der Nennbetriebsspannung liegen und so gering sind, daß die Spannungsimpulse zunächst keine Zündung der Entladung verursachen. Im weiteren Verlauf werden die Spannungswerte bzw. Spannungsamplituden der periodisch wiederkehrenden Spannungsimpulse sukzessive erhöht, bis sich in der Entladungslampe eine dielektrisch behinderte Entladung ausbildet. Es hat sich gezeigt, daß bei den oben erwähnten Typen von Entladungslampen die Zündung einer dielektrisch behinderten Entladung bereits mit Spannungsimpulsen erfolgt, deren Spannungswerte bzw. Spannungsamplituden deutlich unterhalb der Nennbetriebsspannung der Entladungslampe liegen. Die Zündung der dielektrisch behinderten Entladung erfolgt auf schonende Weise und es bilden sich keine bevorzugten Entladungskanäle aus. Insbesondere werden die elektrischen Bauteile des Vorschaltgerätes nicht unmittelbar nach dem Einschalten mit hohen Spannungsimpulsen beaufschlagt. Nach erfolgter Zündung einer dielektrisch behinderten Entladung in der Entladungslampe werden die Spannungswerte bzw. Spannungsamplituden der Spannungsimpulse vorteilhafterweise sukzessive weiter bis auf die Nennbetriebsspannung der Entladungslampe erhöht.

Gemäß eines zweiten Ausführungsbeispiels des erfindungsgemäßen Betriebsverfahrens wird die mindestens eine dielektrisch behinderte Elektrode der Entladungslampe zum Zünden einer dielektrisch behinderten Entladung mit einer Folge von Spannungsimpulsen beaufschlagt, die in der Entladungslampe eine Entladung verursachen. Anschließend wird die Entladung zum Erlöschen gebracht und die mindestens eine dielektrisch behinderte Elektrode unmittelbar nach dem Erlöschen der Entladung mit periodisch wiederkehrenden Spannungsimpulsen beaufschlagt, die in der Entladungslampe eine dielektrisch behinderte Entladung initiieren. Das Betriebsverfahren gemäß der zweiten Ausführungsform ist insbesondere bei Entladungslampen mit mindestens einer dielektrisch behinderten Elektrode anwendbar, die keine kapazitive Zündhilfe aufweisen. Die Folge von Spannungsimpulsen, die die erste Entladung in der Entladungslampe generiert, sorgt für eine teilweise Ionisierung des Entladungsmediums und erzeugt freie Ladungsträger. Falls sich bei der durch die Folge von Spannungsimpulsen hervorgerufenen ersten Entladung in der Entladungslampe bevorzugte Entladungskanäle ausgebildet haben sollten, kollabieren diese nach dem Ende der Impulsfolge, die die erste Entladung hervorgerufen hatte, wieder. Unmittelbar nach dem Erlöschen der ersten Entladung wird die mindestens eine dielektrisch behinderte Elektrode mit periodisch wiederkehrenden Spannungsimpulsen beaufschlagt, die eine ausreichend hohe Spannungsamplitude aufweisen, um eine dielektrisch behinderte Entladung zu verursachen. Da die dielektrisch behinderte Entladung unmittelbar nach dem Erlöschen der ersten Entladung initiiert wird, sind noch genügend freie Ladungsträger von der ersten Entladung vorhanden, die ein problemloses Zünden der dielektrisch behinderten Entladung ermöglichen.

III. <u>Beschreibung der bevorzugten Ausführungsbeispiele</u>

Nachstehend wird das erfindungsgemäße Betriebsverfahren anhand zweier Ausführungsbeispiele näher erläutert. Es zeigen:

Figur 1     Eine schematische Darstellung einer Schaltungsanordnung zum Betrieb einer Entladungslampe mit dielektrisch behinderten Elektroden und zur Durchführung des erfindungsgemäßen Zündverfahrens

Figur 2     Einen Querschnitt durch eine Entladungslampe mit dielektrisch behinderten Elektroden in schematischer Darstellung

Figur 3     Eine schematische Darstellung der Spannungsimpulse während der Zündphase der Entladungslampe gemäß des ersten Ausführungsbeispiels der Erfindung

Figur 4     Eine schematische Darstellung der Spannungsimpulse während der Zündphase der Entladungslampe gemäß des zweiten Ausführungsbeispiels der Erfindung

Figur 5     Eine schematische Darstellung der Spannungsimpulse während der Zündphase der Entladungslampe gemäß des dritten Ausführungsbeispiels der Erfindung

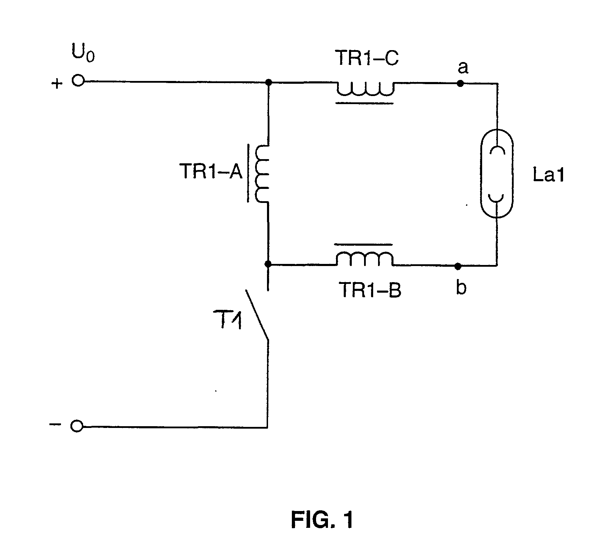

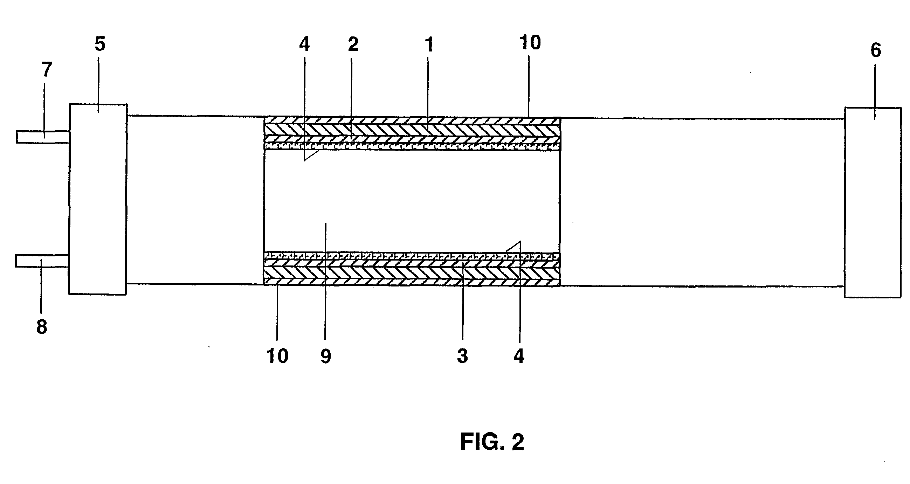

Die beiden Ausführungsformen des erfindungsgemäßen Betriebsverfahrens werden nachstehend mit Hilfe der Figuren 1 und 2 näher beschrieben.

Die in Figur 2 schematisch dargestellte Entladungslampe besitzt ein kreiszylindrisches Entladungsgefäß 1 mit gasdicht verschlossenen Enden. Beide Enden des Entladungsgefäßes 1 sind jeweils mit einer Sockelhülse 5, 6 versehen. Eine der beiden Sockelhülsen 5 weist zwei Sockelkontakte 7, 8 auf. Auf der Innenwand des Entladungsgefäßes 1 sind einander gegenüberliegend zwei streifenförmige, dielektrisch behinderte Elektroden 2, 3 angeordnet, die sich in Längsrichtung des Entladungsgefäßes 1 erstrecken. Die beiden Elektroden 2, 3 sind als streifenförmige Metallschichten auf der Innenwand des Entladungsgefäßes 1 aufgebracht und durch ein Dielektrikum 4 gegen den Innenraum 9 des Entladungsgefäßes 1 abgeschirmt. Die Elektroden 2, 3 sind jeweils mit einem der beiden Sockelkontakte 7, 8 elektrisch leitend verbunden. Während des Lampenbetriebs bildet sich zwischen den beiden Elektroden 2, 3, also quer zur Lampenlängsrichtung, eine dielektrisch behinderte Entladung aus. Die Schlagweite der Entladung entspricht daher im wesentlichen dem Innendurchmesser des Entladungsgefäßes 1. Im Idealfall ist die dielektrisch behinderte Entladung homogen entlang der beiden streifenförmigen Elektroden 2, 3 verteilt. Als Entladungsmedium dient Xenon. In der Entladung wird Xenon-Excimer-Strahlung erzeugt, die mittels Leuchtstoffen in Licht konvertiert wird. Auf der Außenwand des Entladungsgefäßes 1 ist beispielsweise eine auf Massepotential liegende metallische Beschichtung 10, die eine sich in Längsrichtung des Entladungsgefäßes 1 erstreckende lichtdurchlässige Apertur aufweist, oder beispielsweise eine lichtdurchlässige, mit dem Massepotential der Schaltungsanordnung verbundene Indium-Zinnoxid-Schicht 10 aufgebracht. Bei der Lampe gemäß des Ausführungsbeispiels handelt es sich um eine Entladungslampe mit dielektrisch behinderten Elektroden 2, 3, die eine Nennbetriebsspannung von ungefähr 2,4 kV und eine elektrische Nennleistung von ungefähr 18 W besitzt. Diese Entladungslampe wird mit Spannungsimpulsen betrieben, deren Impulsfolgefrequenz ungefähr 25 kHz bis 100 kHz beträgt.

In Figur 1 ist, stark schematisiert, eine Schaltungsanordnung zum Betrieb und insbesondere auch zur Zündung der Entladungslampe abgebildet. Die Schahungsanordnung ist als Sperrwandler ausgebildet, der eine Gleichspannungsquelle $U_0$ von beispielsweise 24 V oder 12 V, einen Feldeffekttransistor T1 mit Ansteuerungsvorrichtung (nicht abgebildet), einen Transformator TR1-A, TR1-B, TR1-C und Anschlüsse a, b für eine Entladungslampe La1 aufweist. Die Anschlüsse a, b sind jeweils mit einem Sockelstift 7, 8 der in Figur 2 abgebildeten Entladungslampe verbunden. Der Aufbau und die Funktionsweise dieser Schaltungsanordnung sind ausführlich in der WO 99/05892 beschrieben.

Die Ansteuerungsvorrichtung besteht im wesentlichen aus einem an sich bekannten Rechteckoszillator, der pulsweitenmodulierte Rechtecksignale zur Steuerung der Gate-Spannung des Feldeffekttransistors T1 generiert und der dadurch den Schaltzustand des Feldeffekttransistors T1 steuert. Solange der Feldeffekttransistor T1 sich im leitenden Zustand befindet, liegt an der Primärwicklung TR1-A im wesentlichen die Gleichspannung $U_0$ an und durch die Primärwicklung TR1-A und den Feldeffekttransistor T1 fließt ein mit der Zeit linear ansteigender Strom, der am Ende der Einschaltdauer des Feldeffekttransistors T1 seinen Spitzenwert $I_{max}$ erreicht. Zu diesem Zeitpunkt ist in dem Magnetfeld der Primärwicklung TR1-A mit der Induktivität $L_P$ die elektrische Energie W

$$W = 0,5 \cdot L_P \cdot I_{max}^2 \qquad (1)$$

gespeichert.

Während der Sperrphase des Feldeffekttransistors T1 wird die in dem Magnetfeld der Primärwicklung TR1-A gespeicherte elektrische Energie W abgebaut und im wesentlichen an die Lampe La1 abgegeben. Die Lampe La1 besitzt aufgrund ihrer dielektrisch behinderten Elektroden 2, 3 eine nicht vernachlässigbare Kapazität der Größe $C_L$ und bildet zusammen mit der Primärwicklung TR1-A einen Schwingkreis.

An der Primärwicklung TR1-A wird während der Sperrphase des Feldeffekttransistors T1 ein Spannungsimpuls mit der Spannungsamplitude $U_P$

$$U_P = \sqrt{\frac{2 \cdot W}{C_L}} - U_0 \qquad (2)$$

erzeugt.

Mit Hilfe der Sekundärwicklung TR1-B wird die Spannungsamplitude $U_P$ der Spannungsimpulse im Verhältnis $n_S/n_P$ der Windungen $n_S$ der Sekundärwicklungen TR1-B, TR1-C und der Primärwicklung $n_P$ auf den Wert $U_S$

$$U_S = \frac{n_S}{n_P} \cdot U_P \qquad (3)$$

hochtransformiert. An der Entladungslampe La1 steht daher ein Spannungsimpuls mit der Spannungsamplitude $U_S$ als Betriebs- oder Zündspannung zur Verfügung. Während der Sperrphase des Feldeffekttransistors T1 wird die Entladungslampe La1 mit Spannungsimpulsen positiver Polarität beaufschlagt. Etwaige Spannungsimpulse negativer Polarität werden durch die parallel zur Drain-Source-Strecke des Feldeffekttransistors T1 angeordnete, im Feldeffekttransistor T1 integrierte Freilaufdiode (nicht abgebildet) auf Massepotential geklemmt. Der Feldeffekttransistor T1 schaltet mit einer Taktfrequenz von ungefähr 25kHz bis 100 kHz. Dementsprechend wird die Entladungslampe La1 mit Spannungsimpulsen beaufschlagt, die eine Impulsfolgefrequenz von ungefähr 25kHz bis 100 kHz besitzen.

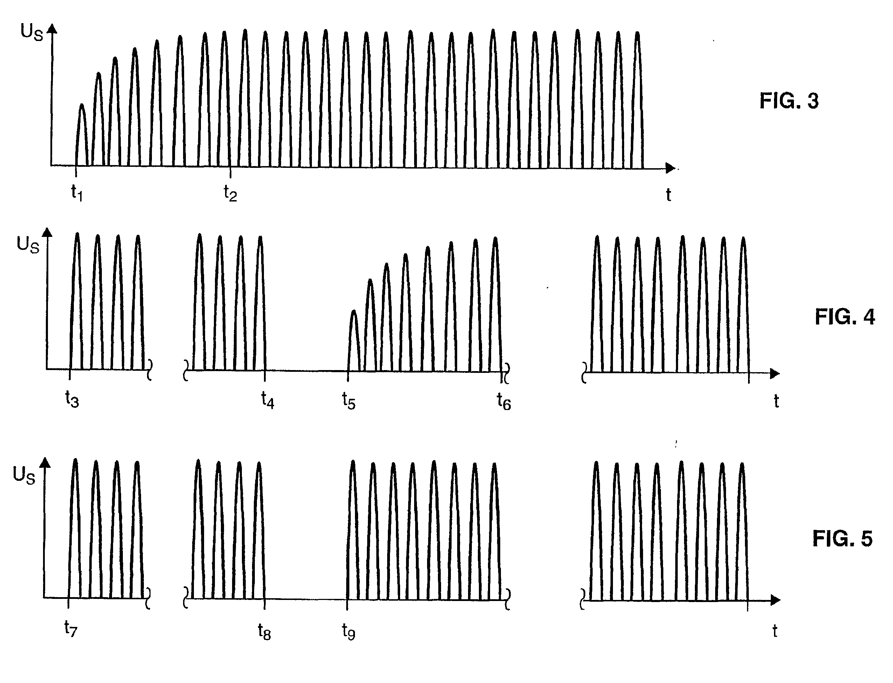

Gemäß des ersten Ausführungsbeispiels der Erfindung werden nach der Inbetriebnahme der Schaltungsanordnung mit Hilfe des oben beschriebenen Sperrwandlers zunächst Spannungsimpulse generiert, deren Spannungsamplitude so gering ist; daß keine Entladung in der Entladungslampe La1 gezündet werden kann. Zu diesem Zweck wird unmittelbar nach der Inbetriebnahme der Schaltungsanordnung der Feldeffekttransistor T1 des Sperrwandlers mittels der Ansteuerungsvorrichtung mit einer minimalen Einschaltdauer, die durch die Dimensionierung der Bauteile der Ansteuerungsvorrichtung bestimmt ist, betrieben. Aus den Formeln (1) bis (3) ist ersichtlich, daß die der Entladungslampe La1 zur Verfügung stehende Spannung $U_S$ linear mit der Stromstärke $I_{max}$, die wiederum linear mit der Einschaltdauer des Feldeffekttransistors T1 anwächst, zunimmt. Die an der Entladungslampe La1 zur Verfügung stehende Spannung $U_S$ ist daher entsprechend gering, so daß keine Entladung stattfinden kann. Eine Zündung der Entladung in der Entladungslampe La1 wird erst nach Beendigung der Einschwingphase des Sperrwandlers eingeleitet. Mit Hilfe der Ansteuerungsvorrichtung wird die Einschaltdauer des Feldeffekttransistors T1 kontinuierlich erhöht. Die Dauer der Sperrphase des Feldeffekttransistors T1 bleibt hingegen konstant. Sie ist geringfügig länger als die Impulsdauer eines Spannungsimpulses. Entsprechend der Einschaltdauer des Feldeffekttransistors T1 wächst gemäß den Formeln (1) bis (3) auch die Spannungsamplitude $U_S$ der an der Entladungslampe La1 verfügbaren und vom Transformator TR1 generierten Spannungsimpulse. Die Einschaltdauer des Feldeffekttransistors T1 wird so lange kontinuierlich erhöht, bis sich in der Entladungslampe La1 eine dielektrisch behinderte Entladung ausbildet und bis die Nennbetriebsspannung der Entladungslampe La1 von 2,4 kV erreicht ist. Es hat sich gezeigt, daß sich in der Entladungslampe La1 bereits bei Spannungsimpulsen mit einer Spannungsamplitude von beispielsweise nur 1,9 kV eine dielektrisch behinderte Entladung ausbildet. Die zum Zünden der dielektrisch behinderten Entladung erforderliche Zündspannung liegt deutlich unterhalb der Nennbetriebsspannung der Entladungslampe La1. Die mit dem schaltungsinternen Massepotential verbundene metallische Beschichtung 10 bzw. die Indium-Zinnoxid-Beschichtung 10 wirkt als kapazitive Zündhilfe. In Figur 3 sind die Spannungsimpulse schematisch abgebildet. Entlang der vertikalen Achse ist die Spannungsamplitude $U_S$ in willkürlichen aufgetragen und die horizontale Achse bildet die Zeitachse. Zwischen den Zeitpunkten $t_1$ und $t_2$, die ein Zeitintervall von ungefähr 100 ms bis 1 s definieren, steigt die Spannungsamplitude $U_S$ der Spannungsimpulse von einem Minimalwert stetig bis zur Nennbetriebsspannung an. Die Zündung der dielektrisch behinderten Entladung in der Lampe erfolgt in diesem Zeitraum. Anschließend wird die Lampe mit ihrer Nennbetriebsspannung betrieben. Die Impulsfolgefrequenz der Spannungsimpulse beträgt ungefähr 100 kHz.

Die zweite Ausführungsform des erfindungsgemäßen Betriebs- oder Zündverfahrens ist für Entladungslampen mit dielektrisch behinderten Elektroden vorgesehen, die keine Zündhilfe aufweisen. Gemäß der zweiten Ausführungsform des erfindungsgemäßen Betriebsverfahrens wird der Feldeffekttransistor T1 unmittelbar nach der Inbetriebnahme des Sperrwandlers mit maximaler Einschaltdauer betrieben. Das bedeutet, daß die Entladungslampe La1 bereits unmittelbar nach der Inbetriebnahme des Sperrwandlers mit Spannungsimpulsen beaufschlagt wird, deren Spannungsamplitude gleich der Nennbetriebsspannung der Entladungslampe La1 ist. In der Entladungslampe La1 bildet sich daher unmittelbar nach der Inbetriebnahme des Sperrwandlers eine dielektrisch behinderte Entladung aus. Um etwaige Inhomogenitäten in der Entladung, beispielsweise bedingt durch die Ausbildung von bevorzugten Entladungskanälen, zu beseitigen, wird die Entladung unmittelbar nach ihrer Entstehung wieder zum Erlöschen gebracht. Das Erlöschen der Entladung kann auf unterschiedliche Weise erreicht werden, beispielsweise durch Verkürzen der Einschaltdauer des Feldeffekttransistors T1, so daß die Spannungsamplitude der an der Entladungslampe La1 anliegenden Spannungsimpulse auf ein Minimum reduziert wird. Unmittelbar nach dem Erlöschen der ersten Entladung wird erneut eine dielektrisch behinderte Entladung in der Entladungslampe La1 gezündet. Da das Entladungsmedium von der ersten Entladung noch teilweise ionisiert ist und noch nicht alle freien Ladungsträger rekombiniert sind, kann die zweite dielektrisch behinderte Entladung bereits mit Spannungsimpulsen gezündet werden, deren Spannungsamplitude $U_s$ deutlich unterhalb der Nennbetriebsspannung der Entladungslampe La1 liegt. Auch bei dem Betriebsverfahren gemäß des zweiten Ausführungsbeispiels wird durch Verlängern der Einschaltdauer des Feldeffekttransistors T1 die Spannungsamplitude $U_S$ der Spannungsimpulse so weit gesteigert, bis die Nennbetriebsspannung der Entladungslampe La1 von 2,4 kV erreicht ist. In Figur 4 sind die Spannungsimpulse schematisch abgebildet. Entlang der vertikalen Achse ist die Spannungsamplitude $U_S$ in willkürlichen aufgetragen und die horizontale Achse bildet die Zeitachse. Die Zeitachse ist nicht maßstabsgetreu dargestellt. Um das zu veranschaulichen, wurde die Zeitachse an zwei Stellen unterbrochen. Insbesondere ist die Darstellung des Pausenzeitintervalls $t_5$, $t_6$ im Vergleich zu der des Zeitintervalls $t_3$, $t_4$ viel zu kurz geraten. Während des durch die beiden Zeitpunkte $t_3$ und $t_4$ definierten Zeitintervalls, das ungefähr dem Zwanzigfachen einer Periodendauer eines Spannungsimpulses, das heißt, ca. 0,2 ms entspricht, wird das Entladungsmedium in der Lampe mit einer ersten Folge von Spannungsimpulsen beaufschlagt, die eine erste Entladung in der Lampe zünden. Während des darauffolgenden, ungefähr 2 ms bis 3 ms andauernden Pausenzeitintervalls, das durch die Zeitpunkte $t_4$ und $t_5$ definiert ist, wird die Lampe La1 nicht mit Spannungsimpulsen beaufschlagt. Die erste Entladung erlischt innerhalb dieses Pausenzeitintervalls. Zum Zeitpunkt $t_5$ wird die Lampe La1 mit Spannungsimpulsen stetig anwachsender Spannungsamplitude $U_S$ beaufschlagt. Während einer durch die Zeitpunkte $t_5$ und $t_6$ definierten Zeitdauer von ungefähr 100 ms bis 1 s wird die Spannungsamplitude $U_S$ dieser Spannungsimpulse, ausgehend von einem Minimalwert, kontinuierlich bis auf die Nennbetriebsspannung von ca. 2,4 kV erhöht. Innerhalb dieser Zeitspanne wird in der Lampe La1 eine dielektrisch behinderte Entladung gezündet. Anschließend wird die Lampe La1 mit ihrer Nennbetriebsspannung betrieben. Die Impulsfolgefrequenz beträgt auch hier ungefähr 100 kHz.

In Figur 5 ist schematisch ein drittes Ausführungsbeispiel des erfindungsgemäßen Zündverfahrens abgebildet, das eine Variante des zweiten Ausführungsbeispiels darstellt. Entlang der vertikalen Achse ist die Spannungsamplitude $U_S$ in willkürlichen aufgetragen und die horizontale Achse bildet die Zeitachse. Die Zeitachse ist nicht maßstabsgetreu dargestellt. Um das zu veranschaulichen, wurde die Zeitachse an zwei Stellen unterbrochen abgebildet. Insbesondere ist die Darstellung des Pausenzeitintervalls $t_8$, $t_9$ im Vergleich zu der des Zeitintervalls $t_7$, $t_8$ viel zu kurz geraten. Während des durch die beiden Zeitpunkte $t_7$ und $t_8$ definierten Zeitintervalls, das ungefähr dem Zwanzigfachen einer Periodendauer eines Spannungsimpulses, das heißt, ca. 0,2 ms entspricht, wird das Entladungsmedium in der Lampe mit einer ersten Folge von Spannungsimpulsen beaufschlagt, die eine erste Entladung in der Lampe zünden. Während des darauffolgenden, ungefähr 2 ms bis 3 ms andauernden Pausenzeitintervalls, das durch die Zeitpunkte $t_8$ und $t_9$ definiert ist, wird die Lampe La1 nicht mit Spannungsimpulsen beaufschlagt. Die erste Entladung erlischt innerhalb dieses Pausenzeit-intervalls. Zum Zeitpunkt $t_9$ wird die Lampe La1 mit Spannungsimpulsen beaufschlagt, deren Spannungsamplitude $U_S$ der Nennbetriebsspannung von ca. 2,4 kV entspricht. Die Impulsfolgefrequenz der Spannungsimpulse beträgt ungefähr 100 kHz.

## Patentansprüche

1. Verfahren zum Betrieb einer Entladungslampe, die mindestens eine dielektrisch behinderte Elektrode (2, 3) und eine Zündhilfe (10) aufweist, wobei die mindestens eine Elektrode (2, 3) der Entladungslampe (La1) mit periodisch wiederkehrenden Spannungsimpulsen beaufschlagt wird,
   **dadurch gekennzeichnet, dass** die mindestens eine Elektrode (2, 3)

   - während eines ersten Zeitraums (t1-t2) ausschließlich mit Spannungsimpulsen mit kontinuierlich ansteigendem, unterhalb der Nennbetriebsspannung der Entladungslampe (La1) liegendem Spannungswert ($U_S$) beaufschlagt wird, wobei der Spannungswert ($U_S$) sukzessiv erhöht wird, bis sich in der Entladungslampe (La1) eine dielektrisch behinderte Entladung ausbildet und die Nennbetriebsspannung der Entladungslampe (La1) erreicht ist,
   - nach dem ersten Zeitraum (t1-t2) ausschließlich mit Spannungsimpulsen beaufschlagt wird, deren Spannungswert ($U_S$) der Nennbetriebsspannung der Entladungslampe (La1) entspricht.

2. Verfahren zum Betrieb einer Entladungslampe mit mindestens einer dielektrisch behinderten Elektrode (2, 3) an einer Schaltungsanordnung, wobei die mindestens eine dielektrisch behinderte Elektrode (2, 3) der Entladungslampe (La1) mit periodisch wiederkehrenden Spannungsimpulsen beaufschlagt wird,
   **dadurch gekennzeichnet, dass**

   - die mindestens eine dielektrisch behinderte Elektrode (2, 3) während eines ersten Zeitraums (t3-t4) mit einer Folge von Spannungsimpulsen beaufschlagt wird, die in der Entladungslampe (La1) eine dielektrisch behinderte Entladung zünden,
   - während eines darauf folgenden Pausenzeitintervalls (t4-t5), das länger als der erste Zeitraum (t3-t4) ist, die mindestens eine dielektrisch behinderte Elektrode (2, 3) nicht mit Spannungsimpulsen beaufschlagt wird, so dass die Entladung zum Erlöschen gebracht wird, und
   - die mindestens eine dielektrisch behinderte Elektrode (2, 3) unmittelbar nach dem Pausenzeitintervall (t4-t5 ; t8-t9) mit periodisch wiederkehrenden Spannungsimpulsen beaufschlagt wird, deren Spannungsamplitude ($U_S$) der Nennbetriebsspannung der Entladungslampe (La1) entspricht oder deren Spannungsamplitude ($U_S$) ausgehend von einem Minimalwert kontinuierlich erhöht wird, bis die Nennbetriebsspannung der Entladungslampe (La1) erreicht ist, um eine dielektrisch behinderte Entladung zu zünden.

## Claims

1. Method for operating a discharge lamp which has at least one dielectrically impeded electrode (2, 3) and a starting aid (10), periodically recurring voltage pulses being applied to the at least one electrode (2, 3) of the discharge lamp (La1), **characterized in that** to the at least one electrode (2, 3)

   - there are applied during a first time period (t1-t2) exclusively voltage pulses with a continuously rising voltage value ($U_S$) below the nominal operating voltage of the discharge lamp (La1), the voltage value ($U_S$) being successively increased until a dielectrically impeded discharge is formed in the discharge lamp (La1) and the nominal operating voltage of the discharge lamp (La1) is reached, and
   - there being applied to the at least one electrode (2, 3) after the first time period (t1-t2) exclusively voltage pulses whose voltage value ($U_S$) corresponds to the nominal operating voltage of the discharge lamp (La1).

2. Method for operating a discharge lamp having at least one dielectrically impeded electrode (2, 3) on a circuit arrangement, periodically recurring voltage pulses being applied to the at least one dielectrically impeded electrode (2, 3) of the discharge lamp (La1), **characterized in that**

- there is applied to the at least one dielectrically impeded electrode (2, 3) during a first time period (t3-t4) a sequence of voltage pulses which ignite a dielectrically impeded discharge in the discharge lamp (La1),
- during an idle time interval (t4-t5) following thereupon which is longer than the first time period (t3-t4), no voltage pulses are applied to the at least one dielectrically impeded electrode (2, 3), and so the discharge is brought to extinction, and
- immediately after the idle time interval (t4-t5; t8-t9) there are applied to the at least one dielectrically impeded electrode (2, 3) periodically recurring voltage pulses whose voltage amplitude ($U_S$) corresponds to the nominal operating voltage of the discharge lamp (La1), or whose voltage amplitude ($U_S$) is continuously increased starting from a minimum value until the nominal operating voltage of the discharge lamp (La1) is reached in order to ignite a dielectrically impeded discharge.

**Revendications**

1. Procédé pour faire fonctionner une lampe à décharge qui a au moins une électrode (2, 3) à décharge rendue incomplète par voie diélectrique et une amorce (10), la au moins une électrode (2, 3) de la lampe (La1) à décharge étant alimentée par des impulsions de tension se répétant périodiquement,
   **caractérisé en ce que** la au moins une électrode (2, 3)

   - est alimentée pendant un premier laps de temps (t1-t2) exclusivement par des impulsions de tension ayant une valeur ($U_S$) de tension continuellement croissante inférieure à la tension nominale de fonctionnement de la lampe (La1) à décharge, la valeur ($U_S$) de tension étant augmentée successivement jusqu'à ce qu'il se forme dans la lampe (La1) à décharge une décharge rendue incomplète par voie diélectrique et jusqu'à ce que la tension nominale de fonctionnement de la lampe (La1) à décharge soit atteinte,
   - est alimentée après le premier laps de temps (t1-t2) exclusivement par des impulsions de tension dont la valeur ($U_S$) de tension correspond à la tension nominale de fonctionnement de la lampe (La1) à décharge.

2. Procédé pour faire fonctionner une lampe à décharge ayant au moins une électrode (2, 3) à décharge rendue incomplète par voie diélectrique dans un montage, la au moins une électrode (2, 3) à décharge rendue incomplète par voie dialectique de la lampe (La1) à décharge étant alimentée par des impulsions de tension se répétant périodiquement,
   **caractérisé en ce que**

   - on alimente la au moins une électrode (2, 3) à décharge rendue incomplète par voie diélectrique pendant un premier laps de temps (t3-t4) par un train d'impulsions de tension qui amorce une décharge rendue incomplète par voie diélectrique dans la lampe (La1) à décharge,
   - on n'alimente pas par des impulsions de tension la au moins une électrode (2, 3) à décharge rendue incomplète par voie diélectrique pendant un intervalle de temps d'arrêt (t4-t5) venant ensuite qui est plus grand que le premier laps de temps (t3-t4), de sorte que la décharge est portée à s'éteindre, et
   - on alimente la au moins une électrode (2, 3) à décharge rendue incomplète par voie diélectrique directement après l'intervalle de temps d'arrêt (t4-t5 ; t8-t9) par des impulsions de tension se répétant périodiquement, dont l'amplitude ($U_S$) de tension correspond à la tension nominale de fonctionnement de la lampe (La1) à décharge, ou dont l'amplitude ($U_S$) de tension augmente continuellement à partir d'une valeur minimum jusqu'à ce que la tension nominale de fonctionnement de la lampe (La1) à décharge soit atteinte pour amorcer une décharge rendue incomplète par voie diélectrique.

**FIG. 1**

FIG. 2

U_S

FIG. 3

t_1    t_2    t

U_S

FIG. 4

t_3    t_4  t_5    t_6    t

U_S

FIG. 5

t_7    t_8  t_9    t

EP 1 124 406 B1